(19) Europäisches Patentamt
European Patent Office
Office européen des brevets

(11) Veröffentlichungsnummer: **0 012 715**
**B1**

# (12) EUROPÄISCHE PATENTSCHRIFT

(45) Veröffentlichungstag der Patentschrift: **08.12.82**

(51) Int. Cl.³: **C 08 G 59/52**, C 08 L 63/00

(21) Anmeldenummer: **79810143.2**

(22) Anmeldetag: **02.11.79**

(54) **Lagerstabile, heisshärtbare Mischungen aus Epoxidharzen und beta-Aminocrotonsäurederivaten und die Herstellung unlöslicher und unschmelzbarer Kunststoffprodukte hieraus.**

(30) Priorität: **08.11.78 CH 11480/78**

(43) Veröffentlichungstag der Anmeldung: **25.06.80 Patentblatt 80/13**

(45) Bekanntmachung des Hinweises auf die Patenterteilung: **08.12.82 Patentblatt 82/49**

(84) Benannte Vertragsstaaten: **DE FR GB IT**

(56) Entgegenhaltungen:
**DD-A-125 275**
**DE-A-2 152 237**
**GB-A-1 347 981**
**US-A-3 637 901**

(73) Patentinhaber: **CIBA-GEIGY AG, Patentabteilung Postfach, CH-4002 Basel (CH)**

(72) Erfinder: **Haug, Theobald, Dr., Untere Flühackerstrasse 12, CH-4402 Frenkendorf (CH)**

**EP 0 012 715 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Lagerstabile, heißhärtbare Mischungen aus Epoxidharzen und beta-Aminocrotonsäurederivaten und die Herstellung unlöslicher und unschmelzbarer Kunststoffprodukte hieraus

Die vorliegende Erfindung betrifft neue, lagerstabile und heißhärtbare Mischungen auf Basis von Epoxidharzen und $\beta$-Amincrotonsäurederivaten sowie ein Verfahren zur Herstellung von Formstoffen aus diesen härtbaren Mischungen.

Aus der DD-PS 125 275 ist es bekannt, daß polymere Produkte erhalten werden, wenn man Addukte aus Maleinsäureanhydrid und Fettsäuretriglyceriden mit Polyaminocrotonsäureestern in äquivalenten Mengen umsetzt. Als Polyaminocrotonsäureester werden hierbei Kondensationsprodukte aus mindestens bifunktionellen Aminen und $\beta$-Ketoestern verstanden. Es wird dort ferner offenbart, daß die aus Maleinsäureaddukten und Polyaminocrotonsäureestern bestehenden Mischungen auch mit epoxidgruppenhaltigen Verbindungen modifiziert werden können. Bei Übertragung der dort angewendeten Äquivalentverhältnisse und unter Anwendung des im Beispiel 1 der DD-PS 125 275 eingesetzten Hexamethylen-bis-aminosäureesters auf konventionelle, Hexahydrophthalsäureanhydrid und Bisphenol A-diglycidyläther enthaltende härtbare Epoxidharzmischungen lassen sich unter diesen Bedingungen keine Vorteile erzielen, da die aus diesen Epoxidharzmischungen hergestellten Formstoffe weich sind und bei stärkerer Deformation brechen.

Es wurde nun gefunden, daß bestimmte $\beta$-Aminocrotonsäurederivate wertvolle Epoxidharzhärtungsmittel darstellen, wenn diese in bezug auf die Epoxidharzkomponente in geringerer als äquivalenter Menge, d. h. in äquivalentem Unterschuß eingesetzt werden. Die aus Epoxidharzen und $\beta$-Aminocrotonsäurederivaten bestehenden härtbaren Mischungen zeichnen sich ferner durch eine vorteilhafte Lagerstabilität und gute Verarbeitbarkeit aus.

Gegenstand der vorliegenden Erfindung sind somit lagerstabile, heißhärtbare Mischungen, dadurch gekennzeichnet, daß sie enthalten

a) eine oder mehrere Epoxidverbindungen mit durchschnittlich mehr als einer Epoxidgruppe im Molekül und
b) ein oder mehrere $\beta$-Aminocrotonsäurederivate der Formeln I bis X

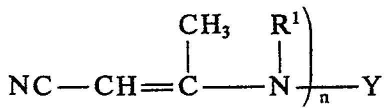
(I)

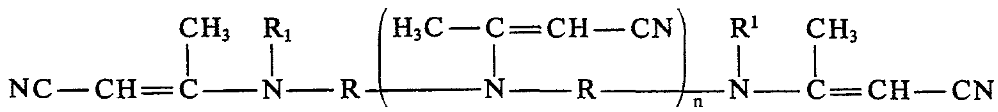
(II)

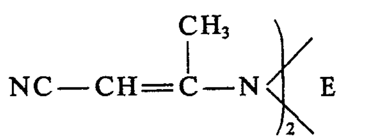
(III)

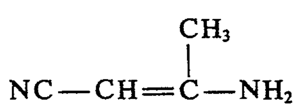
(IV)

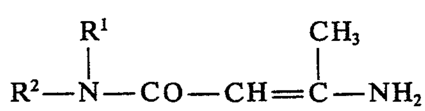
(V)

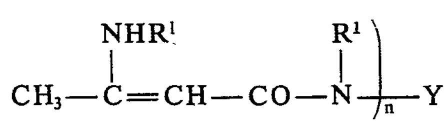
(VI)

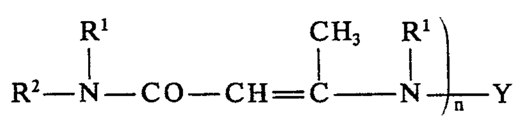
(VII)

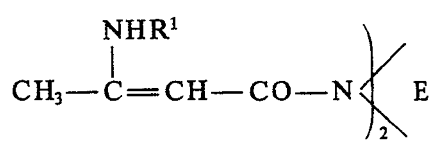
(VIII)

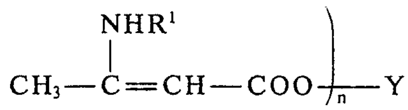 (IX)

oder

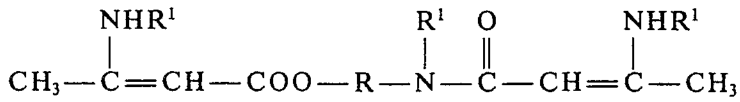 (X)

worin $R^1$ und $R^2$ unabhängig voneinander je ein Wasserstoffatom, Alkyl mit 1 bis 6 C-Atomen, Cycloalkyl mit 5 oder 6 C-Atomen oder Aryl mit 6 bis 10 C-Atomen, Y einen n-wertigen organischen Rest mit 2 bis 30 C-Atomen, R einen aromatischen oder aliphatischen Rest mit bis zu 30 C-Atomen, E zusammen mit den beiden N-Atomen einen heterocyclischen, fünf- oder sechsgliedrigen Ring bedeuten und n für eine Zahl von 1 bis 3 steht, wobei in der härtbaren Mischung pro l Äquivalent β-Aminocrotonsäurederivat, enthaltend die Gruppierung

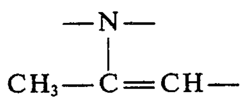

2 bis 8, vorzugsweise 3 bis 5 Epoxidäquivalente vorhanden sind.

Gegebenenfalls enthalten die härtbaren Mischungen noch

c) ein Polyamin der Formel XI

$$G-(NH_2)_y \qquad (XI)$$

worin der Rest G einen y-wertigen organischen Rest mit 2 bis 40 C-Atomen bedeutet und y für eine Zahl von 2 bis 4 steht, ein Polycarbonsäureanhydrid der Formel XII

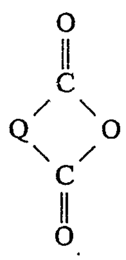 (XII)

worin Q für einen Alkylenrest mit 1–4 C-Atomen, einen gegebenenfalls substituierten Arylenrest oder einen cycloaliphatischen Rest steht, oder ein Maleinimid der Formel XIII

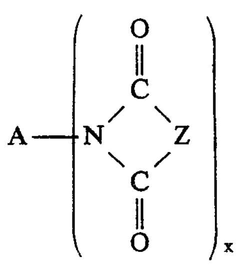 (XIII)

worin A einen x-wertigen organischen Rest mit 2 bis 30 C-Atomen bedeutet, Z für Vinylen oder Methylvinylen steht und x eine Zahl von 1 bis 3 bedeutet.

Vorzugsweise enthalten die erfindungsgemäßen Mischungen als Epoxidverbindung einen Glycidyläther oder eine N-Glycidylverbindung und ein β-Aminocrotonsäurederivat der Formel I, III, IV, V, VI, VII, VIII, IX oder X, worin $R^1$ ein Wasserstoffatom und $R^2$ ein Alkyl mit 1 bis 6 C-Atomen bedeuten, Y für Alkylen mit 2 bis 10 C-Atomen, m- oder p-Phenylen oder einen zweiwertigen Rest der Formeln

$-C_2H_4-O-C_2H_4-$, $-C_2H_4-S-C_2H_4-$, 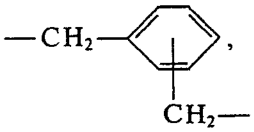,

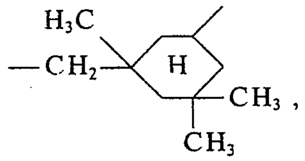, 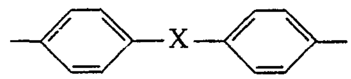 X = O, S oder $CH_2$

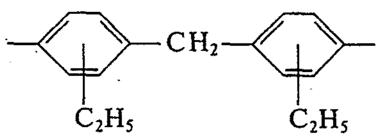

oder

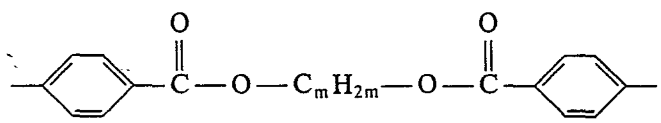

steht,

m = 2 bis 8

R einen aliphatischen Rest mit bis zu 10 C-Atomen bedeutet, die Gruppierung

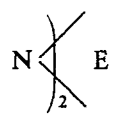 für den Rest der Formel 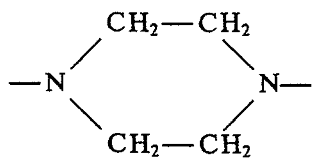

steht und n 2 bedeutet.

In einer besonderen Ausführungsform bestehen die erfindungsgemäßen Mischungen aus Diglycidyläthern zweiwertiger Phenole und $\beta$-Aminocrotonsäurederivaten der Formeln I, IV, V oder VI, insbesondere der Formel VI, worin $R^1$, $R^2$, Y und n die gleiche Bedeutung wie in der bevorzugten Ausführungsform haben.

Als Epoxidverbindung a), die mit den $\beta$-Aminocrotonsäurederivaten der Formeln I bis X gehärtet werden können, eignen sich alle bekannten Klassen von Epoxidharzen. Vor allem kommen Epoxidverbindungen mit durchschnittlich mehr als einer an ein Heteroatom (z. B. Schwefel, vorzugsweise Sauerstoff oder Stickstoff) gebundenen Glycidylgruppe, $\beta$-Methylglycidylgruppe oder 2,3-Epoxycyclopentylgruppe in Frage; genannt seien insbesondere die Di- bzw. Polyglycidyläther von mehrwertigen aliphatischen Alkoholen, wie 1,4-Butandiol, oder Polyalkylenglykolen, wie Polypropylenglykole; Di- oder Polyglycidyläther von cycloaliphatischen Polyolen, wie 2,2-Bis-(4-hydroxycyclohexyl)-propan; Di- bzw. Polyglycidyläther von mehrwertigen Phenolen, wie Resorcin, Bis-(p-hydroxyphenyl)methan, 2,2-Bis(p-hydroxy-phenyl)-propan (= Diomethan), 2,2-Bis-(4'-hydroxy-3',5'-dibromphenyl)-propan, 1,1,2,2-Tetrakis-(p-hydroxyphenyl)-äthan oder von unter sauren Bedingungen erhaltenen Kondensationsprodukten von Phenolen mit Formaldehyd, wie Phenol-Novolake und Kresol-Novolake; Di- bzw. Poly-($\beta$-methylglycidyl)äther der oben angeführten mehrwertigen Alkohole oder mehrwertigen Phenole und die N-Glycidylderivate von Aminen, Amiden und heterocyclischen Stickstoffbasen, wie

N,N-Diglycidylanilin, N,N-Diglycidyltoluidin,
N,N,N',N'-Tetraglycidyl-bis(p-aminophenyl)-methan;
Triglycidylisocyanurat; N,N'-Diglycidyläthylenharnstoff;
N,N'-Diglycidyl-5,5-dimethylhydantoin, N,N'-Diglycidyl-5-isopropylhydantoin;
N,N'-Diglycidyl-5,5-dimethyl-6-isopropyl-5,6-dihydrouracil.

Geeignete Epoxidverbindungen sind ferner Polyglycidylester von mehrwertigen Carbonsäuren, wie Phthalsäure, Terephthalsäure, $\Delta^4$-Tetrahydrophthalsäure und Hexahydrophthalsäure; sowie alicyclische Diepoxide, wie Vinylcyclohexendioxid, Limonendioxid, Dicyclopentadiendioxid, Äthylenglykol-

bis-(3,4-epoxytetrahydrocyclopentadien-8-yl)-glycidyläther, sowie Verbindungen mit zwei Epoxycyclohexylresten, wie

Diäthylenglykol-bis-(3,4-epoxycyclohexancarboxylat),
Bis-(3,4-epoxycyclohexylmethyl)succinat,
3',4'-Epoxy-6'-methylcyclohexylmethyl-3,4-epoxy-6-methyl-cyclohexan-carboxylat und
3',4'-Epoxyhexahydrobenzal-3,4-epoxycyclo-hexan-1,1-dimethanol.

Das mit Formel IV angegebene $\beta$-Aminocrotonsäurenitril ist bekannt. Ebenfalls stellen die N-Alkylen- oder N-Arylen-poly-($\beta$-aminocrotonsäurenitrile) der Formeln I bis III bekannte Verbindungen dar. Die Crotonsäurenitrile der Formeln I bis III können nach den in »Journal für praktische Chemie«, Band 78 (1908), Seite 497, oder in »Berichte der Deutschen Chemischen Gesellschaft«, Band 60 (1927), Seite 1826, beschriebenen Verfahren hergestellt werden, indem man $\beta$-Aminocrotonsäurenitril mit Polyaminen der Formeln Ia bis IIIa

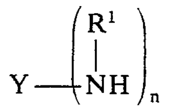

(Ia)

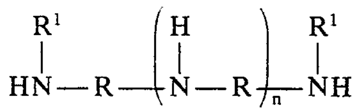

(IIa)

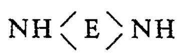

(IIIa)

worin Y, R, $R^1$, n und E die gleiche Bedeutung wie in den Formeln I bis III haben, unter Abspaltung von Ammoniak umsetzt.

Als Beispiele für Amine der Formel Ia seien genannt:

Äthylendiamin, Butylendiamin, Hexamethylendiamin,
2,4,4-Trimethylhexamethylendiamin, Octamethylendiamin, Decamethylendiamin,
Dodecamethylendiamin, 2,2-Dimethyl-1,3-diamino-propan,
2,5-Dimethyl-1,5-diaminoheptan, 2,5-Dimethyl-1,6-diamino-hexan,
2,5-Dimethyl-1,7-diaminoheptan, 3,3,5-Trimethyl-1,6-diaminohexan,
1,2-Bis-(3-aminopropoxy)-äthan, 3-Methoxy-1,6-diaminohexan,
$H_2N(CH_2)_3O(CH_2)_3NH_2$, $H_2N(CH_2)_3NH_2$,
$H_2N-C_2H_4-S-C_2H_4-NH_2$, $H_2N(CH_2)_3N(CH_2)_3NH_2$,
4,4-Diaminodicyclohexylmethan, 1,4-Diamino-cyclohexan,
m-Phenylendiamin, p-Phenylendiamin, 4,4'-Diamino-diphenylmethan,
3,3'-Dichlor-4,4'-diaminodiphenylmethan, Bis-(4-aminophenyl)-2,2-propan,
4,4'-Diamino-diphenyläther, 4,4'-Diaminodiphenylsulfon,
1,5-Diaminonaphthalin, m-Xylylendiamin, p-Xylylendiamin,
Bis-($\gamma$-aminopropyl)-5,5-dimethyl-hydantoin, 4,4'-Diaminotriphenylphosphat,
3-Aminomethyl-3,5,5-trimethylcyclohexylamin (»Isophorondiamin«),
4,4'-Methylen-bis-(2-methylcyclohexylamin), 4-Amino-3-aminomethylpiperidin,
N-substituierte 3-Amino-4-aminomethylpyrrolidine, Phenylindandiamin,
2,5-Di-($\omega$-aminoalkyl)-pyrazin, Bis-(p-aminobenzoesäureester) oder
Bis-(anthranilsäureester) von aliphatischen Diolen sowie
disekundäre Diamine, wie
N,N'-Di-(cyclohexyl)-hexamethylendiamin oder
N,N'-Di-(cyclopentyl)-hexamethylendiamin.

Als Beispiele für dreiwertige Amine der Formel Ia seien genannt:

1,2,4-Triaminobenzol, 1,3,5-Triaminobenzol,
2,4,6-Triaminotoluol, 2,4,6-Triamino-1,3,5-trimethylbenzol,
1,3,7-Triaminonaphthalin, 2,4,4'-Triaminodiphenyl,
3,4,6-Triaminopyridin, 2,4,4'-Triaminophenyläther,
2,4,4'-Triaminodiphenylmethan, 2,4,4'-Triaminodiphenylsulfon,
2,4,4'-Triaminobenzophenon, 2,4,4'-Triamino-3-methyl-diphenylmethan,
N,N,N-Tri(4-aminophenyl)-amin, Tri-(4-aminophenyl)-methan,
Tri-(4-aminophenyl)-phosphat, Tri-(4-aminophenyl)-phosphit,
Tri-(4-aminophenyl)-thiophosphat sowie

$O{=}P(O-CH_2-CH_2-NH_2)_3$

$CH_2-O-C_3H_6-NH_2$
|
$CH_2-O-C_3H_6-NH_2$
|
$CH_2-O-C_3H_6-NH_2$

$CH_3-CH_2-C(CH_2-O-C_3H_6-NH_2)_3$

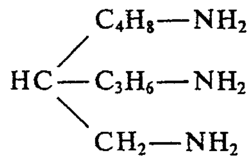

und

1,8-Diamino-4-aminomethyl-oktan.

Als Amine der Formel IIa sind zum Beispiel die Dialkylentriamine und Trialkylentetramine geeignet, vorzugsweise solche mit einem 2 bis 6 Kohlenstoffatome enthaltenden Alkylenrest, wie zum Beispiel Diäthylentriamin, Triäthylentetramin, Dipropylentriamin, Tripropylentetramin oder Tributylentetramin.
Als Amine der Formel IIIa seien Piperazine, Tetrahydropyridin und Imidazolidin genannt.
Die $\beta$-Aminocrotonsäureamide der Formel V sind bekannt und werden durch Umsetzung von Acetessigsäureamid mit Ammoniak, primären oder sekundären Aminen erhalten. Als Beispiele für Verbindungen der Formel V seien genannt

$\beta$-Aminocrotonsäuremonomethylamid,
$\beta$-Aminocrotonsäureisopropylamid,
$\beta$-Aminocrotonsäure-n-butylamid,
$\beta$-Aminocrotonsäuredimethylamid,
$\beta$-Aminocrotonsäurediäthylamid,
$\beta$-Aminocrotonsäureanilid,
$\beta$-Aminocrotonsäurehexylamid und
$\beta$-Aminocrotonsäuremorpholid.

Die $\beta$-Aminocrotonsäurederivate der Formeln VI bis X gehören ebenfalls zu einer bekannten Verbindungsklasse und lassen sich entsprechend den in »Liebigs Annalen«, Band 213, Seite 171 oder in »Berichte der Deutschen Chemischen Gesellschaft«, Band 20, Seite 274 (1887) beschriebenen Verfahren herstellen, indem man die entsprechenden $\beta$-Ketocarbonsäureester bzw. -amide mit Ammoniak, Mono- oder Diaminen umsetzt.
Als Beispiele für Verbindungen der Formel VI seien genannt:

N,N'-Bis-($\beta$-aminocrotonyl)-äthylendiamin,
N,N'-Bis-($\beta$-aminocrotonyl)-hexamethylendiamin,
N,N'-Bis-($\beta$-aminocrotonyl)-2,4,4-trimethylhexamethylendiamin,
N,N'-Bis-($\beta$-aminocrotonyl)-dodecamethylendiamin,
N,N'-Bis-($\beta$-aminocrotonyl)-m-phenylendiamin,
N,N'-Bis-($\beta$-aminocrotonyl)-4,4'-diaminodiphenylmethan,
N,N'-Bis-($\beta$-aminocrotonyl)-3,3'-dichloro-4,4'-diaminodiphenylmethan,
N,N'-Bis-($\beta$-aminocrotonyl)-4,4'-diamino-3,3'-dimethyldicyclohexylmethan,
N,N'-Bis-($\beta$-aminocrotonyl)-1,4-diaminocyclohexan,
N,N'-Bis-($\beta$-aminocrotonyl)-p-xylylendiamin,
N,N'-Bis-($\beta$-aminocrotonyl)-1,3-di-($\gamma$-aminopropyl)-5,5-dimethylhydantoin,
N,N'-Bis-($\beta$-methylaminocrotonyl)-äthylendiamin,
N,N'-Bis-($\beta$-anilinocrotonyl)-hexamethylendiamin,
N,N'-Bis-($\beta$-butylaminocrotonyl)-4,4'-diaminodiphenylmethan,
N,N'-Bis-($\beta$-butylaminocrotonyl)-4,4'-diamino-dicyclohexylmethan,
N,N'-Bis-($\beta$-cyclohexylaminocrotonyl)-1,4-diaminocyclohexan.

Als Beispiele für Verbindungen der Formel VII seien genannt:

N,N'-Äthylen-bis-(β-aminocrotonsäuremethylamid),
N,N'-Hexamethylen-bis-(β-aminocrotonsäure-n-butylamid),
N,N'-(2,4,4-Trimethyl)-hexamethylen-bis-(β-aminocrotonsäure-n-butylamid),
N,N'-Butylen-bis-(β-aminocrotonsäurediäthylamid),
N,N'-p-Phenylen-bis-(β-aminocrotonsäureanilid),
N,N'-4,4'-Diphenylmethan-bis-(β-aminocrotonsäuremethylanilid),
N,N'-4,4'-3,3'-Dimethyl-dicyclohexylmethan-bis-(β-aminocrotonsäurecyclohexylamid),
N,N'-(Di-γ-propylen)-5,5-dimethylhydantoin-bis-(β-aminocrotonsäuremorpholid).

Als Verbindungen der Formel VIII seien genannt:

N,N'-Bis-(β-aminocrotonyl)-piperazin,
N,N'-Bis-(β-aminocrotonyl)-tetrahydropyrimidin,
N,N'-Bis-(β-aminocrotonyl)-imidazolidin.

Als Beispiele der Formel IX seien genannt:

1,2-Äthylenglykol-bis-(β-aminocrotonsäureester),
1,4-Butylenglykol-bis-(β-aminocrotonsäureester),
1,6-Hexamethylenglykol-bis-(β-aminocrotonsäureester),
α,ω-Diäthylenglykol-bis-(β-aminocrotonsäureester),
α,ω-Triäthylenglykol-bis-(β-aminocrotonsäureester),
1,4-Cyclohexandiol-bis-(β-aminocrotonsäureester),
Hydrochinon-bis-(β-aminocrotonsäureester),
2,2-Bis-(4-hydroxyphenyl)propan-bis-(β-aminocrotonsäureester),
α,α'-Dihydroxy-p-xylylen-bis-(β-aminocrotonsäureester),
Bis-(β-hydroxyäthyl)-5,5-dimethylhydantoin-bis-(β-aminocrotonsäureester),
1,2-Äthylen-glykol-bis-(β-methylaminocrotonsäureester),
1,4-Butylenglykol-bis-(β-butylaminocrotonsäureester),
2,2-Bis-(4-hydroxyphenyl)propan-bis-(β-anilinocrotonsäureester),
Trimethylolpropan-tris-(β-aminocrotonsäureester),
Pentaerythrit-tetra-(β-aminocrotonsäureester).

Als Beispiele der Formel X seien genannt:

N-(β-Aminocrotonyl)-äthanolamin-(β-aminocrotonsäureester),
1-N-(β-Aminocrotonyl)-propanolamin-3-(β-aminocrotonsäureester),
N-(β-Aminocrotonyl)-p-aminophenol-(β-aminocrotonsäureester).

Die Epoxidverbindung a) kann mit den β-Aminocrotonsäurederivaten der Formeln I bis X allein in einen makromolekularen Stoff überführt werden, wobei im härtbaren Gemisch jeweils eine größere als die äquivalente Menge an Epoxidverbindung vorhanden ist. Wird die Umsetzung der Epoxidverbindung mit den β-Aminocrotonsäurederivaten gegebenenfalls in Gegenwart einer dritten Reaktionskomponente, wie einem Polyamin der Formel XI, einem Polycarbonsäureanhydrid der Formel XII oder einem Maleinimid der Formel XIII, so enthält das Gemisch aus β-Aminocrotonsäurederivat und der dritten Reaktionskomponente höchstens 70%, vorzugsweise 1 bis 50% insbesondere 20 bis 50% Äquivalente Amino-, Anhydrid- oder Imidgruppen, bezogen auf die Summe der Äquivalente β-Aminocrotonsäurederivat und Aminogruppe oder Anhydridgruppe oder Imidgruppe.

Gegenstand der vorliegenden Erfindung sind somit auch härtbare Mischungen aus Epoxidverbindungen, β-Aminocrotonsäurederivaten der Formeln I bis X, welche zusätzlich ein Polyamin der Formel XI, ein Polycarbonsäureanhydrid der Formel XII oder ein Maleinimid der Formel XIII enthalten.

Die Polyamine der Formel XI sind bekannte Verbindungen. Als Beispiele geeigneter Polyamine seien genannt:

4,4'-Diamino-dicyclohexylmethan, 1,4-Diamino-cyclohexan,
m-Phenylendiamin, p-Phenylendiamin, 4,4'-Diamino-diphenylmethan,
Bis-(4-aminophenyl)-2,2-propan, 4,4'-Diamino-diphenyläther,
4,4'-Diaminodiphenylsulfon, 1,5-Diaminonaphthalin,
m-Xylylendiamin, p-Xylylendiamin, Äthylendiamin, Hexamethylendiamin,
Bis-(γ-aminopropyl)-5,5-dimethylhydantoin,
4,4'-Diaminotriphenylphosphat, 4,4'-Diaminotriphenylthiophosphat,
1,2,4-Triaminobenzol, 1,3,5-Triaminobenzol,
2,4,6-Triaminotoluol, 2,4,6-Triamino-1,3,5-trimethylbenzol,
1,3,7-Triaminonaphthalin, 2,4,4'-Triaminodiphenyl, 3,4,6-Triaminopyridin,
2,4,4'-Triaminophenyläther, 2,4,4'-Triaminodiphenylmethan,

2,4,4'-Triaminodiphenylsulfon, 2,4,4'-Triaminobenzophenon, 2,4,4'-Triamino-3-methyl-diphenylmethan, N,N,N-Tri-(4-aminophenyl)-amin, Tri-(4-aminophenyl)-methan, Tri-(4-aminophenyl)-phosphat, Tri-(4-aminophenyl)-phosphit, Tri-(4-aminophenyl)-thiophosphat, 3,5,4'-Triaminobenzanilid, Melamin, 3,5,3',5'-Tetraaminobenzophenon, 1,2,4,5-Tetraaminobenzol, 2,3,6,7-Tetraaminonaphthalin, 3,3'-Diaminobenzidin, 3,3',4,4'-Tetraaminophenyläther, 3,3',4,4'-Tetraaminodiphenylmethan, 3,3',4,4'-Tetraaminodiphenylsulfon, 3,3-Bis-(3,4'-diaminophenyl)-pyridin.

Als Polycarbonsäureanhydrid der Formel XII können die bekannten aliphatischen, cycloaliphatischen oder aromatischen Anhydride eingesetzt werden. Bevorzugt verwendet man cycloaliphatische Polycarbonsäureanhydride, wie $\Delta^4$-Tetrahydrophthalsäureanhydrid, 4-Methyl-$\Delta^4$-Tetrahydrophthalsäureanhydrid, Hexahydrophthalsäureanhydrid, 4-Methylhexahydrophthalsäureanhydrid, 3,6-Endomethylen-$\Delta^4$-tetrahydrophthalsäureanhydrid (= Nadicanhydrid), 4-Methyl-3,6-endomethylen-$\Delta^4$-tetrahydrophthalsäureanhydrid (= Methylnadicanhydrid); 3,4,5,6,7,7-Hexachlor-3,6-endomethylen-tetrahydrophthalsäureanhydrid (= Chlorendsäureanhydrid) und das Diels-Alder Addukt aus 2 Mol Maleinsäureanhydrid und 1 Mol 1,4-Bis-(cyclopentadienyl)-2-buten oder aromatische Polycarbonsäureanhydride, wie Phthalsäureanhydrid.

Die Maleinimide der Formel XIII stellen ebenfalls eine bekannte Verbindungsklasse dar. Vorzugsweise bedeuten in der Formel XIII A einen Rest der Formeln

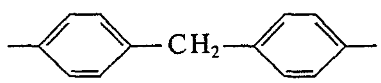,
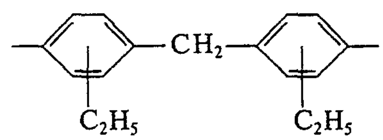

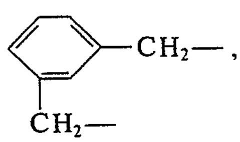,
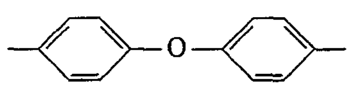.

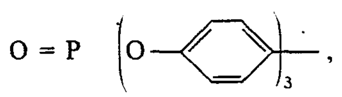, $-(CH_2)_p-$ $p = 2-8$, $-C_2H_4-S-C_2H_4-$,

$-C_2H_4-O-C_2H_4-$,
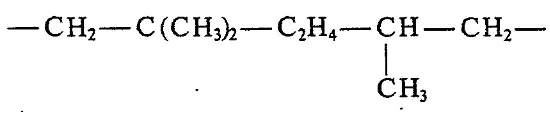

oder

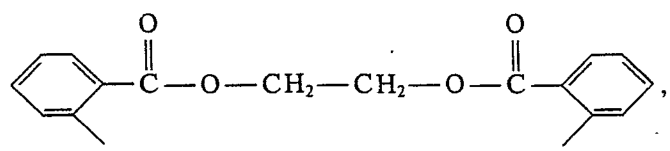,

Z den Vinylenrest und x 2 oder 3. Insbesondere verwendet man die Bis-maleinimide. In einer bevorzugten Ausführungsform verwendet man Bis-maleinimide, worin A in der Formel XIII einen aliphatischen Rest darstellt.

Als spezielle Beispiele für die Maleinimide der Formel XIII seien genannt:

N,N'-Äthylen-bis-maleinimid,
N,N'-Hexamethylen-bis-maleinimid,
N,N'-m-Phenylen-bis-maleinimid,
N,N'-p-Phenylen-bis-maleinimid,
N,N'-4,4'-Diphenylmethan-bis-maleinimid,
N,N'-4,4'-3,3'-Dichlor-diphenylmethan-bis-maleinimid,
N,N'-Diphenyläther-bis-maleinimid,
N,N'-4,4'-Diphenylsulfon-bis-maleinimid,
N,N'-4,4'-Dicyclohexylmethan-bis-maleinimid,
N,N'-α,α-4,4'-Dimethylencyclohexan-bis-maleinimid,
N,N'-m-Xylylen-bis-maleinimid,
N,N'-p-Xylylen-bis-maleinimid,
N,N'-4,4'-Diphenylcyclohexan-bis-maleinimid,

N,N'-m-Phenylen-bis-citraconimid,
N,N'-4,4'-Diphenylmethan-bis-citraconimid,
N,N'-4,4'-2,2-Diphenylpropan-bis-maleinimid,
das N,N',N''-Trismaleinimid des Tris-(4-aminophenyl)-phosphat und das
N,N',N''-Trismaleinimid des Tris-(4-aminophenyl)-thiophosphats.

Die Aushärtung der erfindungsgemäßen Mischungen erfolgt durch Erwärmen der Mischungen auf Temperaturen zwischen 120–250°C, vorzugsweise 150–200°C, insbesondere 150–180°C, wobei die Mischungen ohne Abgabe von flüchtigen Reaktionsprodukten in vernetzte, unlösliche und unschmelzbare Produkte übergehen.

Es ist auch möglich, aus den erfindungsgemäßen Mischungen erst ein Präpolymer herzustellen, indem man die homogen gemischten, gegebenenfalls fein vermahlenen Ausgangsmaterialien zweitweise auf 140°C erhitzt, so daß ein noch thermisch verformbares, teilweise lösliches Produkt entsteht. Dieses Präpolymer muß gegebenenfalls wieder zu einem verarbeitbaren Pulver vermahlen werden. Die Präpolymerisation kann auch durch Erhitzen einer Lösung oder Suspension der Ausgangsmaterialien erfolgen. Dazu kommen Substanzen in Frage, die mit den Ausgangsmaterialien nicht reagieren und die sie gewünschten Falles genügend lösen. Solche Flüssigkeiten sind zum Beispiel:

Dimethylformamid, Tetramethylharnstoff, Dimethylsulfoxid, N-Methylpyrrolidon, Dichloräthylen, Tetrachloräthylen, Tetrachloräthan, Tetrabromäthan, Chlorbenzol, Dichlorbenzol, Brombenzol, Cyclohexanon, Dioxan oder alkylierte aromatische Kohlenwasserstoffe.

Die erfindungsgemäßen härtbaren Mischungen finden ihren Einsatz vor allem auf den Gebieten des Oberflächenschutzes, der Elektrotechnik, der Laminierverfahren und im Bauwesen. Sie können in jeweils dem speziellen Anwendungszweck angepaßter Formulierung, im ungefüllten oder gefüllten Zustand, gegebenenfalls in Form von Lösungen oder Dispersionen, als Lacke, Preßmassen, Sinterpulver, Tauchharze, Spritzgußformulierungen, Imprägnierharze, Bindemittel, Laminierharze, Schaumharze und insbesondere als Gießharze verwendet werden.

Gegenstand der Erfindung ist daher auch ein Verfahren zur Herstellung von vernetzten, unlöslichen und unschmelzbaren Kunststoffprodukten, dadurch gekennzeichnet, daß man Epoxidverbindungen mit durchschnittlich mehr als einer Epoxidgruppe im Molekül mit $\beta$-Aminocrotonsäurederivaten der Formeln I bis X und gegebenenfalls Polyaminen der Formel XI, Polycarbonsäureanhydriden der Formel XII oder Maleinimiden der Formel XIII bei Temperaturen zwischen 120 bis 250°C, vorzugsweise 150 bis 200°C, miteinander umsetzt.

Die erfindungsgemäße Herstellung der vernetzten, unschmelzbaren Produkte erfolgt in der Regel unter gleichzeitiger Formgebung zu Formkörpern, Flächengebilden, Laminaten, Verklebungen oder Schäumen. Dabei können den härtbaren Massen die in der Technologie der härtbaren Kunststoffe gebräuchlichen Zusätze, wie Füllstoffe, Weichmacher, Pigmente, Farbstoffe, Formtrennmittel, Treibmittel, flammhemmende Stoffe, zugesetzt werden. Als Füllstoffe können zum Beispiel Glasfasern, Glimmer, Quarzmehl, Kaolin, kolloidales Siliziumdioxid oder Metallpulver verwendet werden; als Formtrennmittel kann zum Beispiel Calciumstearat dienen und als Treibmittel können beispielsweise Azodicarbonsäureamide, $\alpha,\alpha'$-Azoisobuttersäurenitril oder organische Sulfohydrazide verwendet werden. Das Treibmittel wird je nach Art in Mengen von 0,5–15 Gewichts-%, bezogen auf die Gesamtmenge des Gemisches, eingesetzt.

Wird aus den härtbaren Mischungen zuerst ein Präpolymer hergestellt, so kann dieses, zu einem feinen Pulver vermahlen, nach dem Wirbelsinterverfahren als Oberflächenschutzmittel verwendet werden. Eine Lösung oder Suspension des Präpolymeren in einem geeigneten Lösungsmittel kann zur Herstellung von Laminaten dienen, indem man poröse Flächengebilde wie Gewebe, Fasermatten oder Faservliese, besonders Glasfasermatten oder Glasfasergewebe, mit Lösungen oder Suspensionen imprägniert und das Lösungsmittel durch einen Trocknungsvorgang entfernt. Die weitere Härtung erfolgt in einer Presse bei vorzugsweise 170–250°C, insbesondere 130–180°C, und 49–1962 · $10^4$ $Pa_2$ Druck. Es ist auch möglich, die Laminate in der Presse nur vorzuhärten und die so erhaltenen Produkte in einem Ofen bei 200–280°C, vorzugsweise bei 180–230°C, bis zum Erreichen optimaler Gebrauchseigenschaften nachzuhärten.

Beispiele 1–39

Das Epoxid und das Derivat der $\beta$-Aminocrotonsäure wurden gemischt, in einem Kolben aufgeschmolzen bzw. ineinander gelöst und entgast. Dabei betrug die Badtemperatur, je nach Schmelzpunkt des $\beta$-Aminocrotonsäurederivats und der Viskosität des Epoxids, 100–150°C. Reichten 150°C nicht aus, um die Mischung zu schmelzen, so wurde die Ölbadtemperatur so weit erhöht, daß sie etwa 20°C unter dem Schmelzpunkt des Festproduktes war. Die so erhaltenen Schmelzen konnten mühelos in Formen mit den Maßen 140 × 140 × 4 mm gegossen werden. Durch Erwärmen in einem Ofen

wurden die Schmelzen in klar durchsichtige, gelbe bis rotbraune Formkörper überführt. Der Härtungscyclus betrug im allgemeinen 4 Stunden/140° C, 8 Stunden/160° C und 2–4 Stunden/180° C, wobei zusätzliches 1–2stündiges Erwärmen auf 200° C nicht schadet.

Epoxidverbindung A ist ein im Handel erhältlicher Diglycidyläther des Bis-phenols A mit einem Epoxidäquivalentgewicht von 194. Epoxidverbindung B ist ein im Handel befindliches N,N,N',N'-Tetraglycidyl-4,4'-diamino-diphenylmethan mit einem Epoxidäquivalentgewicht von 108. Epoxidverbindung C ist ein glycidylisierter Phenolnovolak mit einem Epoxidäquivalentgewicht von 175. Epoxidverbindung D ist Terephthalsäurediglycidyläther.

Anhydrid A ist ein aus Hexahydro- und etwa 10 Gewichts-% Tetrahydrophthalsäureanhydrid bestehendes Anhydridgemisch. Das Amin A ist ein Gemisch aus 4,4'-Diamino-3,3'-diäthyl-diphenylmethan, 4,4'-Diamino-3-äthyl-diphenylmethan und 4,4'-Diamino-diphenylmethan.

Das Mischungsverhältnis in Tabelle 1 gibt an, wie viele Epoxidgruppenäquivalente auf ein Äquivalent β-Aminocrotonsäurederivat, enthaltend die Gruppierung

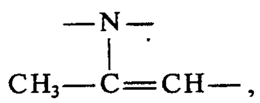

kommen. In Tabelle 2 wird das Mischungsverhältnis in bezug auf Epoxidgruppenäquivalente, β-Aminocrotonsäurederivatäquivalente und Äquivalente der dritten Komponente (Amino-, Anhydrid- oder Imidgruppenäquivalente) wiedergegeben.

Die Prüfdaten von Formkörpern aus β-Aminocrotonsäurederivaten und Epoxiden sind in Tabelle 1 aufgeführt, diejenigen von Prüflingen aus β-Aminocrotonsäurenitril, Epoxid und einer 3. Komponente in Tabelle 2. Die Biegefestigkeit wurde nach VSM 77 103 (Normen des Vereins Schweizerischer Maschinenindustrieller), die Schlagbiegefestigkeit nach VSM 77 105 und die Formbeständigkeit in der Wärme nach ISO/R 75 (Normen der International Standard Organization/Recommendation) bestimmt.

**Tabelle 1**

**Mischungen aus β-Aminocrotonsäurederivaten und Epoxidverbindungen**

| Beispiel | Epoxid-verbindung | Derivat der β-Aminocrotonsäure | Mischungs-verhältnis [Äquivalent] | Biegefestigkeit [N/mm²] | Schlagbiege-festigkeit [kJ/m²] | Wärmeformbe-ständigkeit [°C] |
|---|---|---|---|---|---|---|
| 1 | A | $(NC-CH=C(CH_3)-NH-C_3H_6)_2$ | 2/1 | 147 | 22,8 | 112 |
| 2 | A | desgl. | 5/1 | 146 | 16,0 | 106 |
| 3 | C | desgl. | 3/1 | 168 | 13,0 | 109 |
| 4 | B | desgl. | 5/1 | 168 | 20,0 | 159 |
| 5 | D | desgl. | 3/1 | 124 | 10,2 | 108 |
| 6 | A | 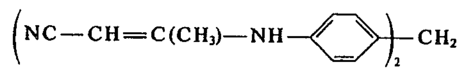 | 3/1 | 162 | 17,0 | 115 |
| 7 | B | desgl. | 3/1 | 164 | 16,5 | 191 |
| 8 | B | desgl. | 5/1 | 135 | 17,2 | 211 |
| 9 | A | $(NC-CH=C(CH_3)-NH-CH_2)_2$ | 3/1 | 153 | 12,2 | 104 |
| 10 | A | 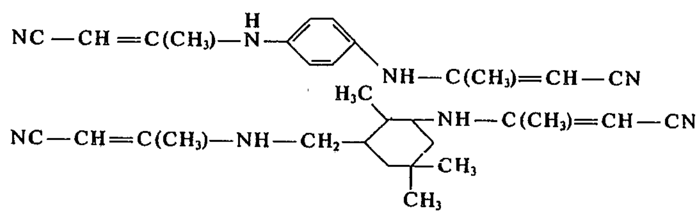 | 3/1 | 155 | 14,5 | 121 |
| 11 | A |  | 3/1 | 121 | 11,5 | 109 |
| 12 | B | $NC-CH=C(CH_3)-NH_2$ | 5/1 | 191 | 13,4 | 155 |
| 13 | B | desgl. | 7/1 | 169 | 15,3 | 149 |
| 14 | B | $(H_2N-C(CH_3)=CH-COOC_2H_4)_2$ | 3/1 | 99 | 13,1 | 146 |
| 15 | C | desgl. | 5/1 | 159 | 16,1 | 88 |
| 16 | B | desgl. | 5/1 | 169 | 10,4 | 128 |
| 17 | A | $(CH_3C(NH_2)=CH-COOC_2H_4-O-CH_2)_2$ | 5/1 | 107 | 11,6 | 63 |

Tabelle 1 (Fortsetzung)

| Beispiel | Epoxid-verbindung | Derivat der β-Aminocrotonsäure | Mischungs-verhältnis [Äquivalent] | Biegefestigkeit [N/mm²] | Schlagbiege-festigkeit [kJ/m²] | Wärmeformbe-ständigkeit [°C] |
|---|---|---|---|---|---|---|
| 18 | A | 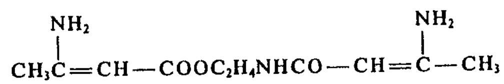 | 3/1 | 104 | 3,8 | 97 |
| 19 | B | 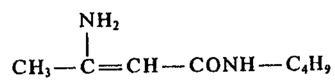 | 5/1 | 143 | 10,4 | 132 |
| 20 | A | 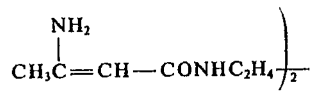 | 3/1 | 147 | 45,7 | 109 |
| 21 | A | 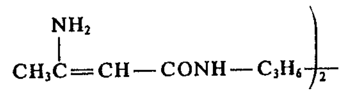 | 3/1 | 135 | 73,6 | 116 |
| 22 | A | 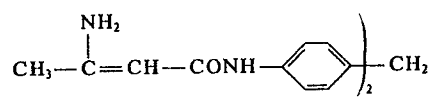 | 5/1 | 156 | 16 | 106 |
| 23 | A | 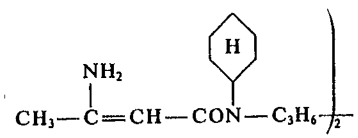 | 3/1 | 116 | 8,6 | 88 |
| 24 | C | 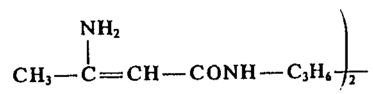 | 3/1 | 157 | 58 | 115 |
| 25 | B | 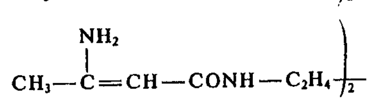 | 5/1 | 159 | 18 | 195 |
| 26 | B | 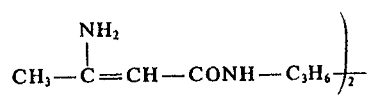 | 5/1 | 137 | 10,1 | 193 |
| 27 | A | 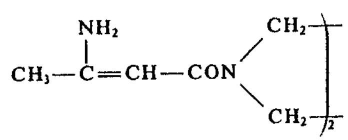 | 3/1 | 131 | 11,9 | 100 |

Tabelle 2

Mischungen aus β-Aminocrotonsäurederivaten, Epoxidverbindungen und einer 3. Komponente

| Beispiel | Epoxid-verbindung | β-Aminocrotonsäurederivat | 3. Komponente | Mischungs-verhältnis [Äquivalente] | Gelierzeit [Minuten/°C] | Biege-festigkeit [N/mm²] | Schlag-festigkeit [kJ/m²] | Wärmeformbe-ständigkeit [°C] |
|---|---|---|---|---|---|---|---|---|
| 28 | A | 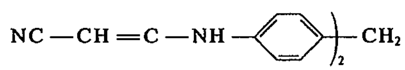 | 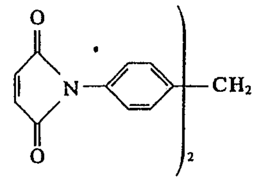 | 3:1:2 | | 71 | 10,8 | 174 |
| 29 | A | desgl. | 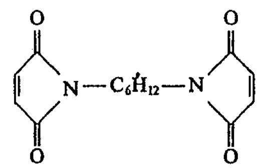 | 3:1:2 | | 157 | 17,1 | 112 |
| 30 | A | desgl. | Anhydrid A | 3:1:0,5 | 120/160 | 114 | 11,3 | 172 |
| 31 | A | desgl. | Amin A | 4:1:1 | 22/160 | 151 | 20,8 | 111 |
| 32 | A | desgl. | Anhydrid A[1]) | 5:1:1 | 32,5/160 | | | 96 |
| 33 | A | 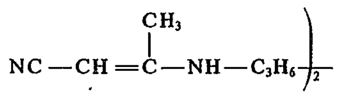 | 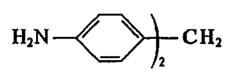 | 4:1:1 | 6/160 | 166 | 24,1 | 108 |
| 34 | A | 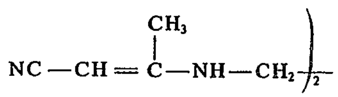 | Anhydrid A | 4:1:1 | 65/180 | 103 | 9,8 | 93 |
| 35 | A | 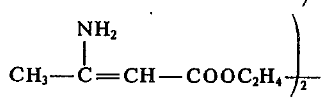 | Amin A | 4:1:1 | 35,5/160 | 95 | 22,2 | 89 |
| 36 | A | desgl. | Anhydrid A[1]) | 4:1:1 | 50/160 | 111 | 10,9 | 85 |
| 37 | A | 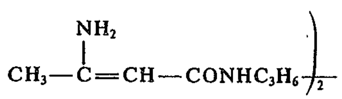 | Amin A | 4:1:1 | 18/160 | 143 | 70,7 | 121 |

**Tabelle 2 (Fortsetzung)**

| Beispiel | Epoxid-verbindung | β-Aminocrotonsäurederivat | 3. Komponente | Mischungs-verhältnis [Äquivalente] | Gelierzeit [Minuten/°C] | Biege-festigkeit [N/mm²] | Schlag-festigkeit [kJ/m²] | Wärmeformbe-ständigkeit [°C] |
|---|---|---|---|---|---|---|---|---|
| 38 | A | 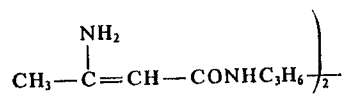 | Anhydrid A[1]) | 4:1:1 | 32/160 | 135 | 13,5 | 91 |
| 39 | A | desgl. | Anhydrid A[1]) | 6:1:1 | 61/160 | 134 | 14,8 | 81 |
| 40 | A | 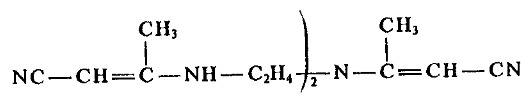 | | 5/1 | | 70 | | 62 |
| 41 | B | 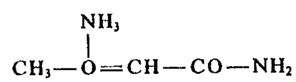 | | 5/1 | | 156 | 16,4 | 166 |

[1]) Um die Reaktion Epoxid/Anhydrid zu beschleunigen, wurden 0,5 Gewichtsprozent Benzyldimethylamin zugesetzt.

Beispiel 42

Epoxidharz A und das β-Aminocrotonsäurederivat der Formel

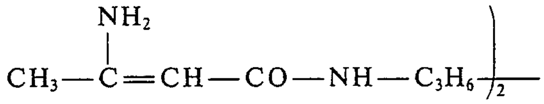

wurden im Äquivalentverhältnis von 3 : 1 gemischt und bei 150° C aufgeschmolzen. Die Schmelze wurde entgast, zur Herstellung von Formkörpern in Formen gegossen und bei 130° C während 12 Stunden ausgehärtet. Es wurden Formstoffe mit folgenden Eigenschaften erhalten:

| | |
|---|---|
| Biegefestigkeit | 151 N/mm² |
| Schlagbiegfestigkeit | 34,4 kJ/m² |
| Wärmeformbeständigkeit | 146° C |

Lagerstabilität:

a) Theoretischer Epoxidgehalt obiger Mischung = 4,22 Äquivalente/kg
b) Epoxidgehalt nach Aufschmelzen und Entgasen obiger Mischung bei 150° C während 15 Minuten = 3,32 Äquivalente/kg
c) Epoxidgehalt der abgekühlten Schmelze nach Lagerung bei Raumtemperatur während 12 Tagen = 3,31 Äquivalente/kg

Der Abfall des Epoxidgehaltes von 4,22 auf 3,32 Äquivalenten/kg ist auf eine Vorreaktion beim Aufschmelzen und Entgasen zurückzuführen.

Beispiel 43

7,6 g Epoxidharz A und 1,9 g β-Aminocrotonsäure-p-hydroxianilid wurden gut gemischt und ein einem Aluminiumschälchen (Durchmesser 5,5 cm) durch 12stündiges Erwärmen auf 140° C in einen klar durchsichtigen, harten Formkörper überführt. An dem Formkörper wurde eine Glasumwandlungstemperatur von 134° C gemessen.

Beispiel 44

8,4 g eines aus 70 Gewichtsteilen N,N'-Diglycidyl-5,5-dimethylhydantoin und 30 Gewichtsteilen N-Glycidyl-N'-oxipropylglycidyl-5,5-dimethylhydantoin bestehenden Epoxidharzgemisches mit einem Epoxidäquivalentgewicht von 141 und 2,5 g N,N'-Bis-(β-aminocrotonyl)-butylendiamin wurden wie in Beispiel 43 in einen gehärteten Formkörper überführt, an dem eine Glasumwandlungstemperatur von 171° C gemessen wurde.

**Patentansprüche**

1. Lagerstabile, heißhärtbare Mischungen, dadurch gekennzeichnet, daß sie enthalten

a) eine Epoxidverbindung mit durchschnittlich mehr als einer Epoxidgruppe im Molekül und
b) ein β-Aminocrotonsäurederivat der Formeln I bis X

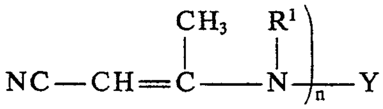 (I)

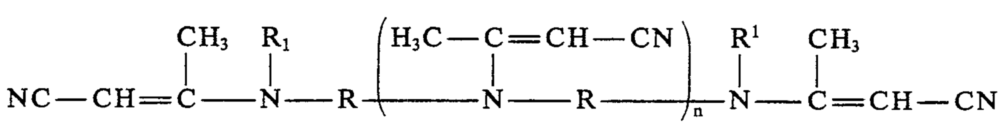 (II)

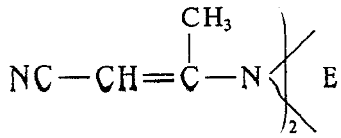

(III)

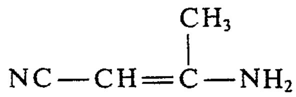

(IV)

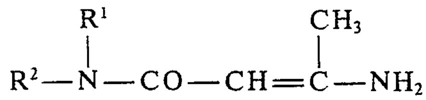

(V)

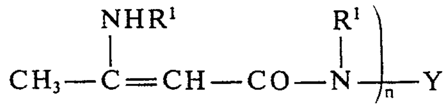

(VI)

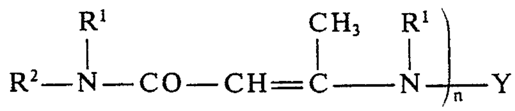

(VII)

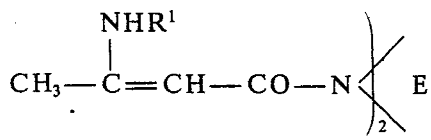

(VIII)

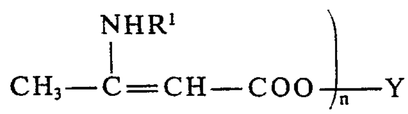

(IX)

oder

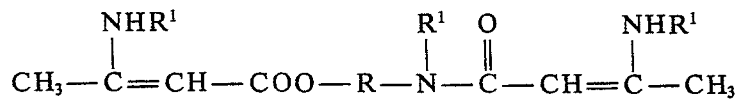

(X)

worin $R^1$ und $R^2$ unabhängig voneinander je ein Wasserstoffatom, Alkyl mit 1 bis 6 C-Atomen, Cycloalkyl mit 5 oder 6 C-Atomen oder Aryl mit 6 bis 10 C-Atomen, Y einen n-wertigen organischen Rest mit 2 bis 30 C-Atomen, R einen aromatischen oder aliphatischen Rest mit bis zu 30 C-Atomen, E zusammen mit den beiden N-Atomen einen heterocyclischen, fünf- oder sechsgliedrigen Ring bedeuten und n für eine Zahl von 1 bis 3 steht,
wobei in der härtbaren Mischung pro 1 Äquivalent $\beta$-Aminocrotonsäurederivat, enthaltend die Gruppierung

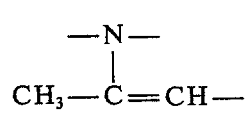

2 bis 8, vorzugsweise 3 bis 5 Epoxidäquivalente vorhanden sind.

2. Mischungen gemäß Anspruch 1, dadurch gekennzeichnet, daß sie als Epoxidverbindung einen Glycidyläther oder eine N-Glycidylverbindung und ein $\beta$-Aminocrotonsäurederivat der Formel I, III, IV, V, VI, VII, VIII, IX oder X enthalten, worin $R^1$ ein Wasserstoffatom und $R^2$ ein Alkyl mit 1 bis 6 C-Atomen bedeuten, Y für Alkylen mit 2 bis 10 C-Atomen, m- oder p-Phenylen oder einen zweiwertigen Rest der Formeln

$-C_2H_4-O-C_2H_4-$, $-C_2H_4-S-C_2H_4-$, 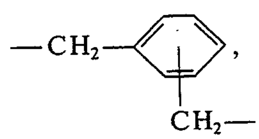 ,

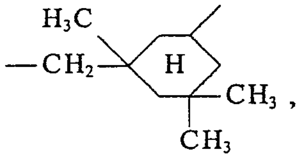

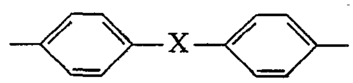

, $X{=}O$, S oder $CH_2$

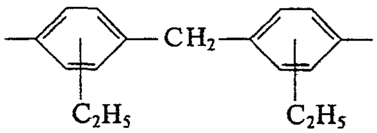

oder

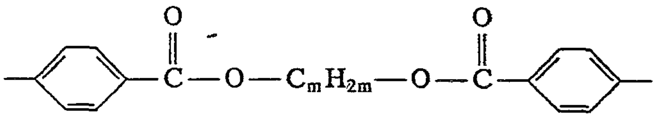

steht,

$m = 2$ bis 8

R einen aliphatischen Rest mit bis zu 10 C-Atomen bedeutet, die Gruppierung

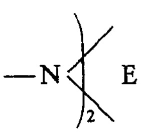

für den Rest der Formel

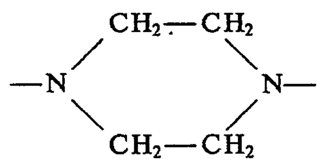

steht und n 2 bedeutet.

3. Mischungen gemäß Anspruch 1, dadurch gekennzeichnet, daß sie als Epoxidverbindung einen Diglycydyläther zweiwertiger Phenole und ein $\beta$-Aminocrotonsäurederivat der Formel I, IV, V oder VI enthalten, worin $R^1$, $R^2$, Y und n die gleiche Bedeutung wie in Anspruch 2 haben.

4. Mischungen gemäß Anspruch 1, dadurch gekennzeichnet, daß sie als Epoxidverbindung einen Diglycidyläther zweiwertiger Phenole und ein $\beta$-Aminocrotonsäurederivat der Formel VI enthalten, worin $R^1$, Y und n die gleiche Bedeutung wie in Anspruch 2 haben.

5. Mischungen gemäß Anspruch 1, dadurch gekennzeichnet, daß sie zusätzlich

c) ein Polyamin der Formel XI

$$G{-}(NH_2)_y \qquad (XI)$$

worin der Rest G einen y-wertigen organischen Rest mit 2 bis 40 C-Atomen bedeutet und y für eine Zahl von 2 bis 4 steht,
ein Polycarbonsäureanhydrid der Formel XII

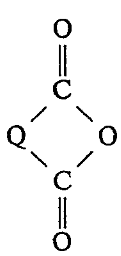

(XII)

worin Q für einen Alkylenrest mit 1–4 C-Atomen, einen gegebenenfalls substituierten Arylenrest oder einen cycloaliphatischen Rest steht, oder ein Maleinimid der Formel XIII

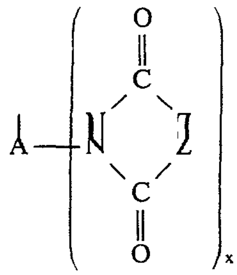

(XIII)

worin A einen x-wertigen organischen Rest mit 2 bis 30 C-Atomen bedeutet, Z für Vinylen oder Methylvinylen steht und x eine Zahl von 1 bis 3 bedeutet, enthalten.

6. Mischungen gemäß Anspruch 5, dadurch gekennzeichnet, daß sie eine Epoxidverbindung mit durchschnittlich mehr als einer Epoxidgruppe im Molekül, ein $\beta$-Aminocrotonsäurenitril der Formel I und ein Polyamin der Formel XI, vorzugsweise ein Diamin, enthalten.

7. Mischungen gemäß Anspruch 5, dadurch gekennzeichnet, daß sie eine Epoxidverbindung mit durchschnittlich mehr als einer Epoxidgruppe im Molekül, ein $\beta$-Aminocrotonsäurenitril der Formel I und ein Maleinimid der Formel XIII, vorzugsweise ein Bis-maleinimid, enthalten.

8. Verfahren zur Herstellung von unlöslichen und unschmelzbaren Kunststoffprodukten aus härtbaren Mischungen gemäß Anspruch 1, dadurch gekennzeichnet, daß man die Mischungen im Temperaturbereich von 120 bis 250° C aushärtet.

9. Verfahren zur Herstellung von unlöslichen und unschmelzbaren Kunststoffprodukten aus härtbaren Mischungen gemäß Anspruch 4, dadurch gekennzeichnet, daß man die Mischungen im Temperaturbereich von 120 bis 250° C aushärtet.

**Claims**

1. A heat-curable mixture which is stable on storage, which mixture contains

a) an epoxide compound with, on average, more than one epoxide group in the molecule and
b) a $\beta$-aminocrotonic acid derivative of the formula I to X

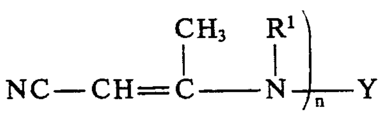

(I)

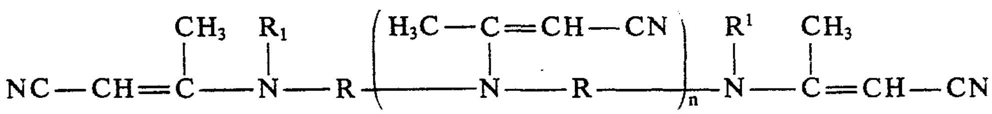

(II)

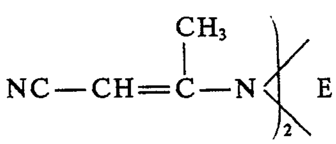

(III)

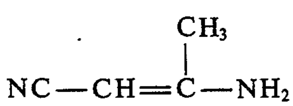

(IV)

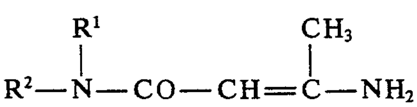

(V)

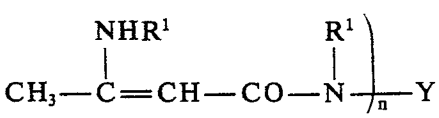

(VI)

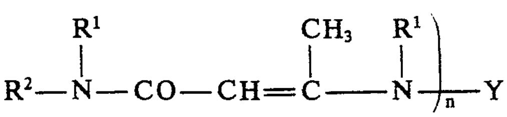

(VII)

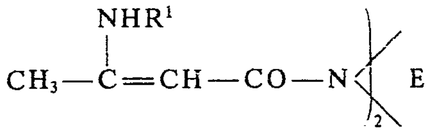
(VIII)

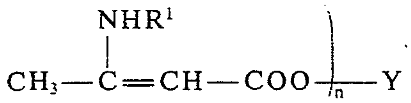
(IX)

or

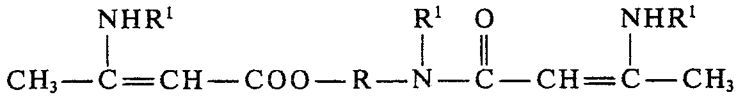
(X)

in which each of $R^1$ and $R^2$ independently of other is a hydrogen atom, alkyl having 1 to 6 C atoms, cycloalkyl having 5 or 6 C atoms or aryl having 6 to 10 C atoms, Y is a n-valent organic radical having 2 to 30 C atoms, R is an aromatic or aliphatic radical having not more than 30 C atoms, E, together with the two N atoms, is a heterocyclic, five-membered or six-membered ring and n is an integer from 1 to 3, the curable mixture containing 2 to 8 and preferably 3 to 5 epoxide equivalents per 1 equivalent of $\beta$-aminocrotonic acid derivative containing the grouping

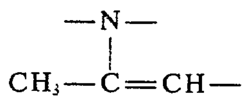

2. A mixture according to claim 1, which contains a glycidyl ether or a N-glycidyl compound as the epoxide compound and a $\beta$-aminocrotonic acid derivative of the formula I, III, IV, V, VI, VII, VIII, IX or X, in which $R^1$ is a hydrogen atom and $R^2$ is an alkyl having 1 to 6 C atoms, Y is alkylene having 2 to 10 C atoms, m- or p-phenylene or a divalent radical of the formulae

$—C_2H_4—O—C_2H_4—$, $—C_2H_4—S—C_2H_4—$, 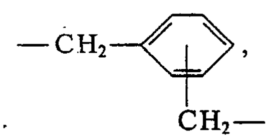 ,

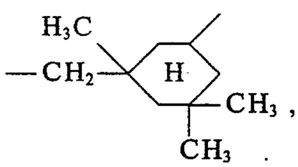 , 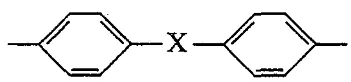 , $X = O$, S or $CH_2$,

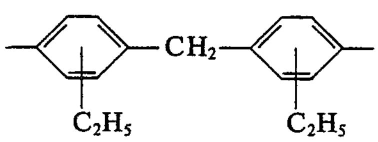

or

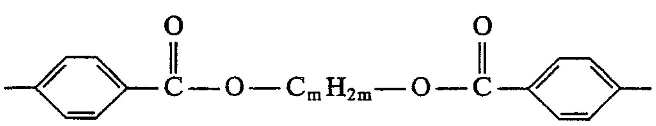

(m = 2 to 8)

R is an aliphatic radical having up to 10 C atoms, the grouping

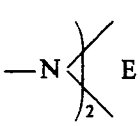 is the radical of the formula 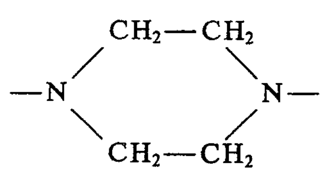 and n is 2.

3. A mixture according to claim 1, which contains a diglycidyl ether of dihydric phenols as the epoxide compound and a $\beta$-aminocrotonic acid derivative of the formula I, IV, V or VI, in which $R^1$, $R^2$, Y and n are as defined in claim 2.

4. A mixture according to claim 1, which contains a diglycidyl ether of dihydric phenols as the epoxide compound and a $\beta$-aminocrotonic acid derivative of the formula VI in which $R^1$, Y and n are as difined in claim 2.

5. A mixture according to claim 1, which additionally contains c) a polyamine of the formula XI

$$G-(NH_2)_y \qquad (XI)$$

in which the radical G is a y-valent organic radical having 2 to 40 C atoms and y is an integer from 2 to 4, a polycarboxylic acid anhydride of the formula XII

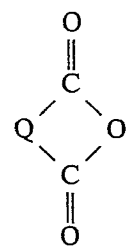

(XII)

in which Q is an alkylene radical having 1–4 C atoms, a substituted or unsubstituted arylene radical or a cycloaliphatic radical, or a maleimide of the formula XIII

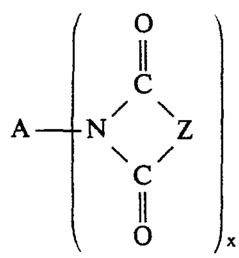

(XIII)

in which A is a x-valent organic radical having 2 to 30 C atoms, Z is vinylene or methylvinylene and x is an integer from 1 to 3.

6. A mixture according to claim 5, which contains an epoxide compound with, on average, more than one epoxide group in the molecule, a $\beta$-aminocrotononitrile of the formula I and a polyamine of the formula XI, preferably a diamine.

7. A mixture according to claim 5, which contains an epoxide compound with, on average, more than one epoxide group in the molecule, a $\beta$-aminocrotononitrile of the formula I and a maleimide of the formula XIII, preferably a bis-maleimide.

8. A process for the preparation of an insoluble and infusible plastic product from a curable mixture according to claim 1, which comprises curing the mixture in the temperature range from 120° to 250° C.

9. A process for the preparation of an insoluble and infusible plastic product from a curable mixture according to claim 4, which comprises curing the mixture in the temperature range from 120° to 250° C.

## Revendications

1. Mélanges stables au stockage, durcissables à chaud, caractérisés en ce qu'ils contiennent:

a) un composé époxydique ayant en moyenne plus d'un groupe époxyde par molécule et
b) un dérivé de l'acide $\beta$-aminocrotonique répondant aux formules I à X

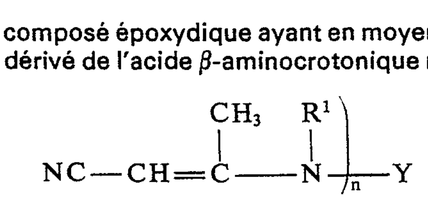

(I)

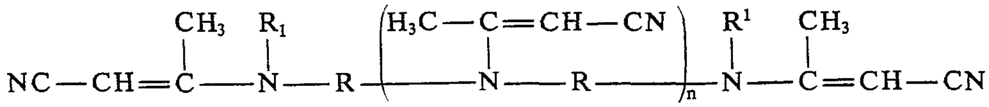

(II)

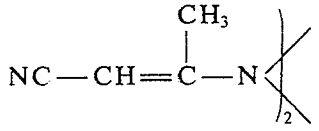

(III)

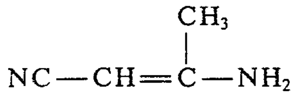

(IV)

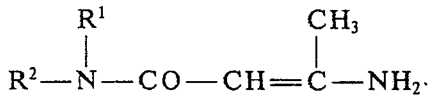

(V)

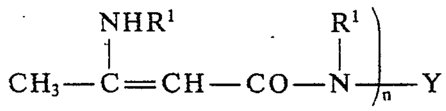

(VI)

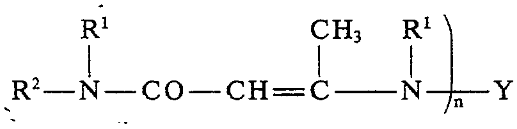

(VII)

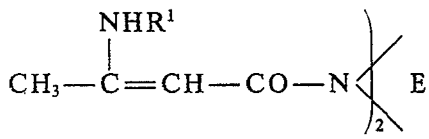

(VIII)

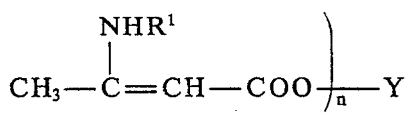

(IX)

ou

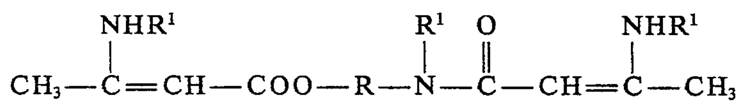

(X)

dans lesquelles $R^1$ et $R^2$ désignent indépendamment l'un de l'autre chacun un atome d'hydrogène, un alkyle en $C_1$ à $C_6$, un cycloalkyle en $C_5$ ou $C_6$ ou un aryle en $C_6$ à $C_{10}$, Y un radical organique n-valent en $C_2$ à $C_{30}$, R un radical aromatique ou aliphatique ayant jusqu'à 30 atomes de C, E désigne avec les deux atomes de N un noyau hétérocyclique à 5 ou 6 maillons et n représente un nombre de 1 à 3, le mélange durcissable contenant pour un équivalent de dérivé de l'acide $\beta$-aminocrotonique renfermant le groupe

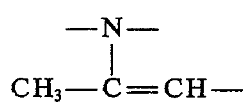

2 à 8, de préférence 3 à 5 équivalents d'époxyde.

2. Mélanges suivant la revendication 1, caractérisés en ce qu'ils contiennent comme composé époxydique un éther glycidylique ou un composé N-glycidylique et un dérivé de l'acide $\beta$-aminocrotonique répondant aux formules I, III, IV, VI, VII, VIII, IX ou X, dans lesquelles $R^1$ désigne un atome d'hydrogène et $R^2$ un alkyle en $C_1$ à $C_6$, Y un alkylène en $C_2$ à $C_{10}$, un m- ou p-phénylène, ou un radical divalent répondant aux formules:

$-C_2H_4-O-C_2H_4-$ ,  $-C_2H_4-S-C_2H_4-$ , 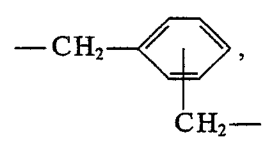 ,

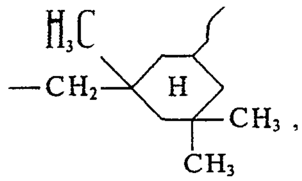, 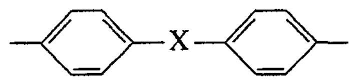, X=O, S ou $CH_2$

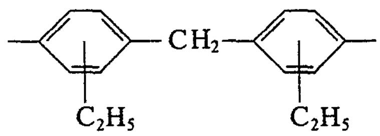

ou

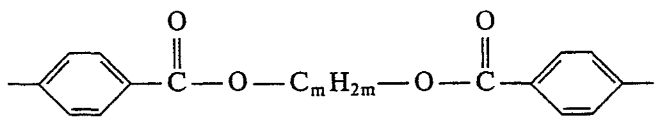

m = 2 à 8

R désigne un radical aliphatique ayant jusqu'à 10 atomes de carbone, le groupe

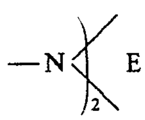 réprésente le radical répondant à la formule 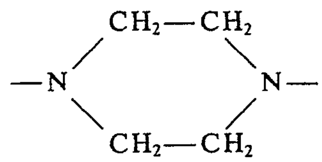

et n est égal à 2.

3. Mélanges suivant la revendication 1, caractérisés en ce qu'ils contiennent comme composé époxydique un éther diglycidylique de diphénols et un dérivé de l'acide $\beta$-aminocrotonique répondant aux formules I, IV, V ou VI, dans lesquelles $R^1$, $R^2$, Y et n ont la même signification que dans la revendication 2.

4. Mélanges suivant la revendication 1, caractérisés en ce qu'ils contiennent comme composé époxydique un éther diglycidylique de diphénols et un dérivé de l'acide $\beta$-aminocrotonique répondant à la formule VI, dans laquelle $R^1$, Y et n ont la même signification que dans la revendication 2.

5. Mélanges suivant la revendication 1, caractérisé en ce qu'ils contiennent en outre

c) une polyamine répondant à la formule XI

$$G-(NH_2)_y \qquad (XI)$$

dans laquelle le radical G représente un radical organique y-valent en $C_2$ à $C_{40}$ et y est un nombre de 2 à 4, un anhydride polycarboxylique répondant à la formule XII

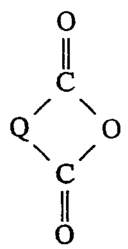

(XII)

dans laquelle Q désigne un radical alkylène en $C_1$ à $C_4$, un radical arylène éventuellement substitué ou un radical cycloaliphatique, ou un maléimide répondant à la formule XIII

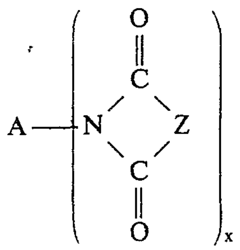

(XIII)

dans laquelle A désigne un radical organique x-valent en $C_2$ à $C_{30}$, Z un vinylène ou un méthyl-vinylène et x un nombre de 1 à 3.

6. Mélanges suivant la revendication 5, caractérisés en ce qu'ils contiennent un composé époxydique ayant en moyenne plus d'un groupe époxyde dans sa molécule, un $\beta$-aminocrotonitrile répondant à la formule I et une polyamine répondant à la formule VXI, de préférence une diamine.

7. Mélanges suivants la revendication 5, caractérisés en ce qu'ils contiennent un composé époxydique ayant en moyenne plus d'un groupe époxyde dans sa molécule, un $\beta$-aminocrotonitrile répondant à la formule I et un méléimide répondant à la formule XIII, de préférence un bis-maléimide.

8. Procédé de préparation de produits de matières plastiques insolubles et infusibles à partir de mélanges durcissables suivant la revendication 1, caractérisé en ce qu'on durcit les mélanges dans le domaine de températures de 120 à 250° C.

9. Procédé de préparation de produits de matières plastiques insolubles et infusibles à partir de mélanges durcissables suivant la revendication 4, caractérisé en ce qu'on durcit les mélanges dans le domaine de températures de 120 à 250° C.